# EUROPEAN PATENT APPLICATION

(11) **EP 1 277 643 A1**
(43) Date of publication of application: **22.01.2003**
(21) Application number: 02078185.2
(22) Date of filing: 19.07.2002
(51) Int. Cl.: B62B 7/04

(54) **Steering for a baby buggy**

(30) Priority: 20.07.2001 NL 1018602
(71) Applicant: All Our Kids Europe B.V., 6224 LJ Maastricht (NL)
(72) Inventor: Bost, Bart Willem Jozef, 6221 EW Maastricht (NL)
(74) Representative: Voncken, Bartholomeus Maria Christiaan

(57) **Abstract**

There is disclosed a baby buggy comprising a frame and wheels supported in the frame, in which at least one of said wheels is pivotable about a substantially vertical pivot axis. In order to obtain a more stable movement, a pivoting mechanism is arranged between the pivotable wheel and the frame, which pivoting mechanism comprises a centring mechanism for moving the wheel in question to a central position.

## Description

The invention relates to a baby buggy comprising a frame and wheels supported in the frame, in which at least one of said wheels is pivotable about a substantially vertical pivot axis.

With a known baby buggy of this type, two front wheels in the form of castors are used. Frequently, said castors are found not to be fully stable but rather make wobbly movements during forward movement of the known baby buggy. As a result, the baby buggy does not move in a straight line but makes undesirable sideward movements to a greater or smaller extent. Also unevennesses in the surface easily interfere with the desired position of the castors, so that an extra effort on the part of the user is required for moving the baby buggy in the desired direction. When changing over from forward movement to rearward movement, the castors first pivot through substantially 180° about their pivot axes, which pivoting is likewise accompanied by an undesired (sideward) movement of the baby buggy.

It is an object of the present invention to provide a solution for the above problems.

In order to achieve that objective, the baby buggy according to the invention is characterized in that a pivoting mechanism is arranged between the pivotable wheel and the frame, which pivoting mechanism comprises a centring mechanism for moving the wheel in question to a central position.

The centring mechanism ensures that under normal circumstances the pivotable wheel is maintained in a central position which generally corresponds to a position for straight forward or straight rearward movement of the baby buggy. Wobbly movements of the wheels are thus prevented, whilst pivoting of the wheels through 180° upon changing over from forward movement to rearward movement is prevented. Nevertheless, the centring mechanism allows pivoting of the wheel in question for making a turn when the baby buggy is manipulated in a suitable manner by a user.

In a preferred embodiment, the pivoting mechanism comprises two centring members which are pivotable about said pivot axis relative to each other, which centring members are provided with mating surfaces facing towards each other, which comprise mating centring projections and centring recesses, in which one of said centring members is non-rotatably connected to the frame, and the other centring member is non-rotatably connected to the wheel.

The mating action of the centring projections and the centring recesses ensures that the wheel in question will reach its central position.

It is also possible in that case for at least one of the centring members to be spring-loaded in the direction of the other centring member, being movable against the spring action in a direction away from said other centring member.

The spring load in part determines the force with which the centring mechanism attempts to move the wheel to the central position. Said force is furthermore determined by the shape of the mating centring projections and centring recesses.

From a constructional point of view, it is preferred to use an embodiment in which the movable centring member is non-rotatably but axially movably accommodated in a housing member which is fixedly connected to the frame or to the wheel, in which housing member the other centring member is rotatably accommodated.

In this case, the term fixedly connected to the wheel means not pivotable about the pivot axis. The wheel can roll in the usual manner, of course. The housing member forms a guide for guiding the movement of the spring-loaded centring member relative to the other centring member, which is likewise accommodated in the housing member.

It is noted that it is also possible for both centring members to be movable against a spring load. When such a housing member is used, both centring members are axially movable relative thereto, but only one centring member is also pivotable with respect thereto.

Furthermore it is possible for the spring load to be generated by a compression spring disposed in the housing, although also any other suitable spring means can be used.

Preferably, one centring member has a V-shaped projection, whilst the other centring member, which mates therewith, has a corresponding V-shaped recess. The sloping sides of a centring projection or centring recess thus formed provide the centring action. The gradient of said sloping sides partially determines the centring force being generated. In order to achieve an optimum centring action (handling characteristic of the baby buggy), said sloping sides may also have a varying gradient.

If the centring mechanism is provided with stops for defining a maximum relative pivoting movement between the frame and the wheel in question, such that the centring mechanism remains operative in the entire pivoting range defined by the stops, an adequate operation of the centring mechanism is ensured under all circumstances.

Preferably, the wheel in question is a front wheel of the baby buggy, and in that case two pivotable wheels arranged side by side may be provided, which wheels are interconnected by means of a connecting rod.

In such a case, a centring mechanism may be used at each of the two pivotable wheels. This is not necessary, however, because in principle a centring mechanism used at the location of one wheel can also effect the centring of the other wheel via the connecting rod.

It is also possible to implement the inventive concept in a baby buggy having a different number of wheels, such as a three-wheel buggy. In such a case, the front wheel may comprise a centring mechanism, for example. It is also possible, however, to use a centring mechanism in combination with all the wheels of a baby buggy.

The invention will be explained in more detail hereinafter with reference to the drawing, which shows an embodiment of the baby buggy according to the invention.

In the drawing:
Fig. 1 is an exploded view, which schematically shows the components of a centring mechanism as it is used in a baby buggy according to the invention; and
Fig. 2 is a perspective view of part of a baby buggy according to the invention.

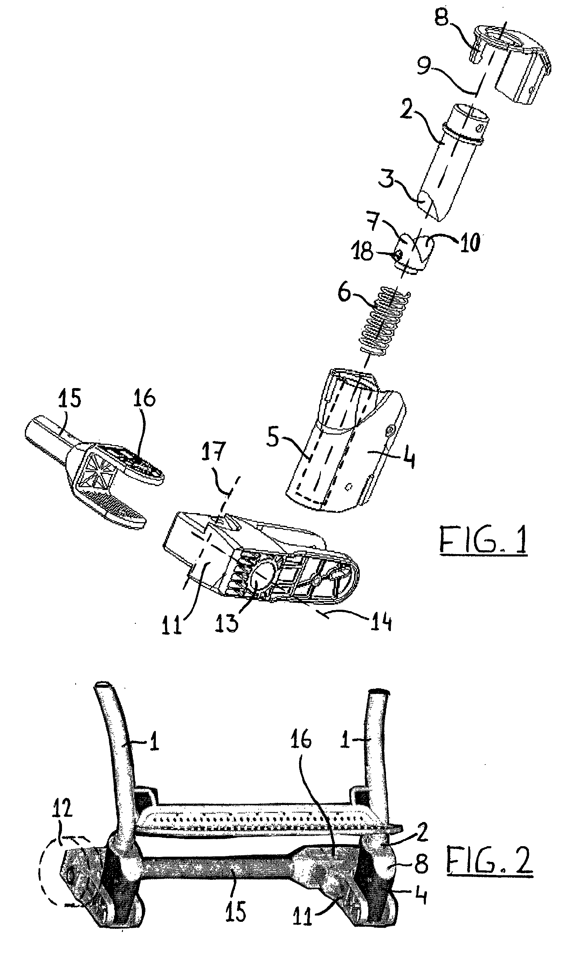

The components that form part of a centring mechanism used with a pivotable wheel of a baby buggy will now be discussed with reference to Fig. 1. A first centring member 2 is fixed to the bottom side of a frame tube 1 (see Fig. 2). Said centring member 2 is provided with a V-shaped centring projection 3 at its end remote from the frame tube 1. Said centring member 2 may also form an integral part of the frame tube 1 for that matter.

The centring mechanism furthermore comprises a housing member 4 provided with a cylindrical internal cavity 5. Said cavity 5 successively accommodates a compression spring 6, a second centring member 7 and the first centring member 2. A cover 8 retains the aforesaid parts in the cavity 5 of the housing member 4 after being fixed to the housing member 4, in which position the compression spring is tensioned, thus biasing the second centring member 7 against the first centring member 2.

Suitable means, for example a cam 18 on the centring member 7, which mates with a groove 4 (not shown) in the wall of the cavity 5 of the housing 4, ensure that the second centring member 7 cannot rotate with respect to the housing member 4. Axial movement against the spring force of the compression spring 6 is possible, however. The first centring member 2, on the other hand, can pivot with respect to the housing member 4 about a pivot axis 9.

The second centring member 7 is provided with a centring recess 10 facing towards the first centring member 2, which recess has a V-shape which corresponds to the shape of the centring projection 3.

The housing member 4 is fixedly connected (or possibly spring-connected, in order to absorb shocks acting on the wheels) to a wheel supporting member 11 intended for receiving a wheel 12 (see Fig. 2). To this end, the wheel supporting member 11 is fitted with a bearing bushing 13 for receiving a wheel axle of the wheel 12. The axis of rotation of a wheel in mounted position is schematically indicated by the dotted line 14 in Fig. 1.

Finally, Fig. 1 shows a connecting rod which is pivotally connected about a pivot axis 17 to the wheel supporting member 11 via a forked end 16. The opposite end of the connecting rod 15 (not shown) is connected to a second centring mechanism of mirror image construction for another wheel in a comparable manner (also refer to Fig. 2).

The operation of the centring mechanism as shown is as follows. The centring members 2 and 7 are maintained in engagement with each other under the influence of the spring force of the compression spring 6 via the centring projection 3 and the centring recess 10. The mating action between said centring members 2 and 7 thus defines a relative rotational position which generally corresponds to a centred central position of the wheel or wheels in question (straight ahead movement of the baby buggy). A centring force exerted by the compression spring 6 at the location of the mating centring recess 10 and the centring projection 3 must be overcome before the wheel/wheels can pivot about the pivot axis 9. In order to do so, a user of the baby buggy must therefore exert an appropriate force on the wheels by suitable manipulation of the baby buggy (this is possible because the wheels either lead or trail, i.e. the pivot axis 9 and the axis of rotation 14 of the wheel 12 do not intersect).

When the user no longer exerts such a force, the centring mechanism will automatically return the wheel/wheels to the centred position. Also in the case of forces too small to overcome the spring force, however, a centred position will be maintained. In this way, the movement of the baby buggy will be stable without any wobbling of the wheels, whilst the changeover from forward movement to rearward movement (or vice versa) need not lead to the wheels pivoting 180° about the pivot axis 9.

The handling characteristic can be adapted to a user's individual requirements by a suitable selection of the spring characteristic of the compression spring 6, the shape and the number of mating centring projections and centring recesses.

Not shown in the figures are means (such as stops) for determining a maximum relative pivoting movement between the frame tubes 1 and the wheels 12, in such a manner that the centring mechanism will remain operative over the entire pivoting range of the wheels. Referring to Fig. 1, it would after all be conceivable for the centring projection 3 to take up a position perpendicularly to this centring recess 10 in the absence of such means/stops, as a result of which automatic centring would not take place.

The invention is not limited to the embodiment as described above, which can be varied in many ways within the scope of the invention as defined in the claims. Thus the baby buggy may have any suitable number of wheels, in which the centring mechanism is used in combination with all the wheels or only with some of the wheels.

## Claims

1. A baby buggy comprising a frame and wheels supported in the frame, in which at least one of said wheels is pivotable about a substantially vertical pivot axis, **characterized in that** a pivoting mechanism is arranged between the pivotable wheel and the frame, which pivoting mechanism comprises a centring mechanism for moving the wheel in question to a central position.

2. A baby buggy according to claim 1, **characterized in that** the pivoting mechanism comprises two centring members which are pivotable about said pivot axis relative to each other, which centring members are provided with mating surfaces facing towards each other, which comprise mating centring projections and centring recesses, in which one of said centring members is non-rotatably connected to the frame, and the other centring member is non-rotatably connected to the wheel.

3. A baby buggy according to claim 1, **characterized in that** at least one of the centring members is spring-loaded in the direction of the other centring member, being movable against the spring action in a direction away from said other centring member.

4. A baby buggy according to claim 1, **characterized in that** the movable centring member is non-rotatably but axially movably accommodated in a housing member which is fixedly connected to the frame or to the wheel, in which housing member the other centring member is rotatably accommodated.

5. A baby buggy according to claim 1, **characterized in that** said spring load is generated by a compression spring disposed in the housing.

6. A baby buggy according to any one of the claims 2 - 5, **characterized in that** one centring member has a V-shaped projection, whilst the other centring member, which mates therewith, has a corresponding V-shaped recess.

7. A baby buggy according to any one of the preceding claims, **characterized in that** the centring mechanism is provided with stops for defining a maximum relative pivoting movement between the frame and the wheel in question, such that the centring mechanism remains operative in the entire pivoting range defined by the stops.

8. A baby buggy according to any one of the preceding claims, **characterized in that** the wheel in question is a front wheel of the baby buggy.

9. A baby buggy according to any one of the preceding claims, **characterized in that** two pivotable wheels arranged side by side are provided, which wheels are interconnected by means of a connecting rod.

10. A baby buggy according to claim 9, **characterized in that** a centring mechanism is used at each of the two pivotable wheels.
